Europäisches Patentamt

European Patent Office

Office européen des brevets

(19)

(11) Publication number: **0 168 667 B1**

## EUROPEAN PATENT SPECIFICATION

(12)

(45) Date of publication of patent specification: **04.03.92**

(51) Int. Cl.⁵: **G07F 7/10**, H04L 9/08, H04L 9/32

(21) Application number: **85107626.5**

(22) Date of filing: **20.06.85**

(54) **Secured message transfer system and method using updated session code.**

(30) Priority: **19.07.84 US 632297**

(43) Date of publication of application:
**22.01.86 Bulletin 86/04**

(45) Publication of the grant of the patent:
**04.03.92 Bulletin 92/10**

(84) Designated Contracting States:
**CH DE FR GB LI**

(56) References cited:
**EP-A- 0 112 943**
**EP-A- 0 112 944**
**EP-A- 0 131 906**
**GB-A- 205 002**

(73) Proprietor: **TANDEM COMPUTERS INCORPO-RATED**
**10435 N. Tantau Avenue**
**Cupertino, California 95014-0709(US)**

(72) Inventor: **Atalla, Martin M.**
**18 Monte Vista**
**Atherton California 94025(US)**
Inventor: **Maracchini, David J.**
**311 Silvertip Court**
**Milpitas California 95035(US)**

(74) Representative: **Liesegang, Roland, Dr.-Ing. et al**
**FORRESTER & BOEHMERT Widenmayer-strasse 4 Postfach 22 01 37**
**W-8000 München 22(DE)**

Rank Xerox (UK) Business Services

## Description

The invention relates to a method for securing data communications between the remote location of an individual user who has an assigned account number and a host location, the invention further relates to a system for use by an authorized user having an account number for securely transferring data from one remote location to a host location at which selected information about such users is stored.

Numerous encoding schemes and interactive message procedures are known which can be used to a substantially assure faithful transmission of unaltered messages between computer locations. For instance, GB-A 2,050,021 discloses a data-handling apparatus for securing the transmission of data under control of an authorized individual from one location having an identification number to data processing means having memory means with the identification number stored therein at a remote location, wherein during an initialization procedure code numbers are produced at a host location and at a remote location, which code numbers are encrypted and then compared, so that in response to favourable comparison an authorized user can be identified, whereafter a session can be started and encoding is carried out by using encrypted session keys which are generated in an encryption module.

Such apparatus and schemes are very successful, if stationary host and remote locations can be used, however, are typically inadequate to secure against unauthorized interceptions over voice-grade telephone lines and are typically not suitable for use by a great many individuals having their own general-purpose, computer-based terminals.

It is the object of the present invention to provide a method for securing data communications between a remote location and a host location which is suitable to be used with public data lines.

This object is achieved by a method according to claim 1, a system for carrying out such method is given in claim 7.

Method and system according to the present invention validate the claimed identity of an individual user who is identified during an initial sign-on procedure, and then enable a user to transmit in secured manner selected messages to a remotely-located host computer using unsecured communication channels such as telephone, mail, telegram and the like. The techniques of the present invention employ selectively encrypted messages which assure privacy over unsecured communication channels and which avoid revealing the true identity of the user or the activities of the host computer, under the control of session encoding keys which are different for each authorized user and for each communication session of such user. The session encoding keys are established at both ends of a communication link based upon the claimed identity of a user, internal key codes, personal identification numbers, a synchronizing code, and other unique inputs, and encrypted messages may then be sent bidirectionally over the established communication link, and at the conclusion of the session, an updated synchronizing code is stored at both locations as the basis for establishing a new session encoding key for a subsequent session. Additional levels of security can be introduced conveniently, and intermediate host data terminals can be interposed in the communication scheme between two remote terminals. The security of the system according to the present invention is based upon a security module which may be physically and logically isolated from the host computer near its location for storing the identifying and verifying data about authorized users, and upon a processing module near the user's data terminal that controls the secured sequence of exchange procedures and for which no particular security safeguards need be taken. Duplication of the information available at one user's processing module is inconsequential because it is unusable by another user without essential information available only from such one authorized user.

Figure 1 is a block diagram illustrating one embodiment of a host computer that is operable with a remote terminal according to the present invention; and

Figure 2 is a flow chart illustrating the initialization operation of the present invention;

Figure 3 is a flow chart illustrating the session operation of a host computer with an initialized remote terminal; and

Figures 4a and 4b are signal diagrams illustrating another embodiment of the present invention.

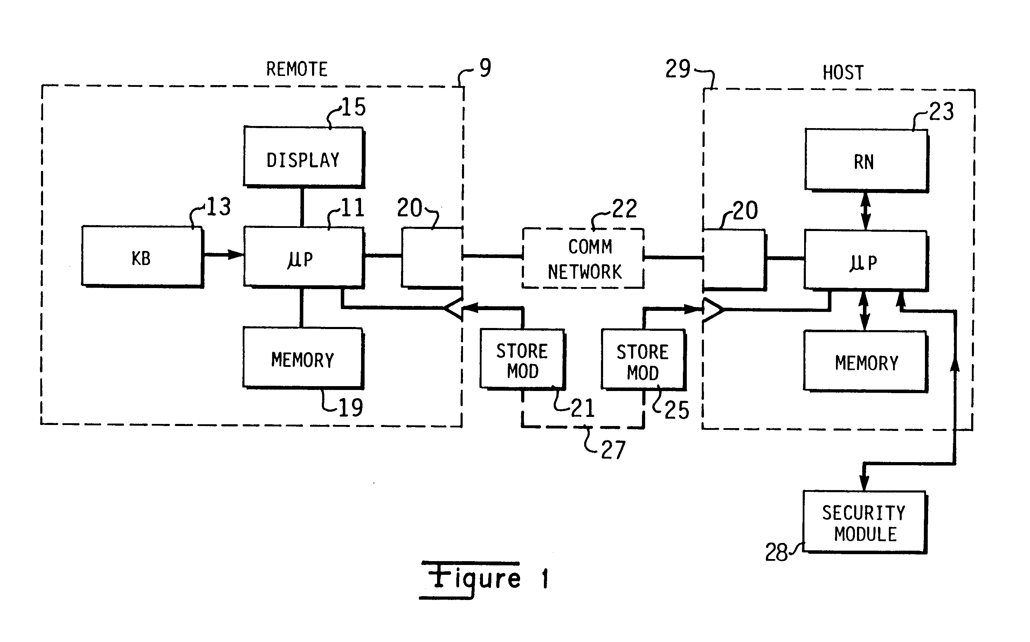

Referring now to the pictorial block diagram of Figure 1, there is shown a remote data terminal 9 which includes a microprocessor 11 centrally connected to operate with a keyboard 13, a display unit 15, a memory unit 19, and a mass storage module 21, for example, of the floppy disc type. The terminal 9 may include data port apparatus 20 such as a modem for data communications with the host computer 29 over voice-grade telephone communication channel 22. Alternatively, an unsecured communication channel 22 may be of any type for transmitting transaction information to the host computer 29, for example, by mail, telegram, or the like. The host computer 29 may include similar elements as previously set forth in connection with terminal 9, and in addition includes a security module 28 which may be physically secured against unauthorized intrusions by the operators of the host computer and which contains selected codes for encrypting and decrypting the data that is required to verify the identities of authorized users. Such data may be stored in the security module 28, or elsewhere, in encrypted form. The host computer also includes a generator 23 of synchronous index numbers (which may be sequential or random, etc.) for operation in the data transfer operation, as later described. Of course, the generation of Synchronization Index Numbers (SIN) may be performed in conventional manner by the microprocessor-controlled selection of feedback paths around successive logic cells of a shift register, as described in the literature. Also, the host computer 29 includes a module 25 for generating a floppy disc, or other appropriate program-storage media, which is suitably encoded during the initialization session for the specific user and which is then transferred 27 to such user as his personalized mass program-storage medium for use in module 21 at the location of the remote terminal 9. In this way, the controls for the procedures that preserve the security and privacy of a data-exchanging session may be conveniently transferred to the authorized user along with an "initial" synchronizing number, as later described, without compromising the security of the system.

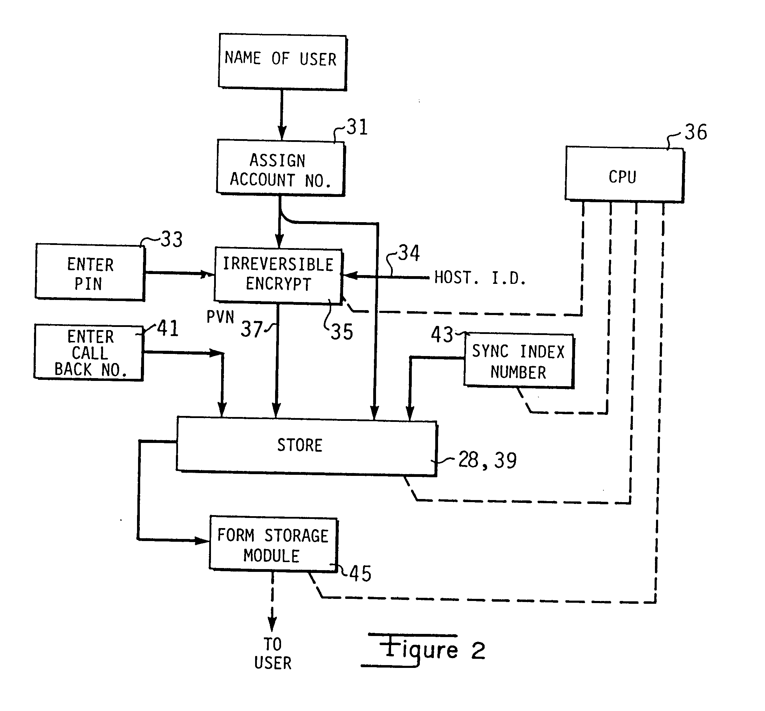

As illustrated in Figures 1 and 2, an individual user first signs on via an initialization procedure. This generates the key codes required to encrypt and decrypt the data stored in encrypted form outside the security module 28 in order later to verify the identity and authority of the user to engage in a data-exchanging session with the host computer. An individual user, who may simply present his name as the basis for his claimed identity, is initially authorized to operate the secured communication system by assigning to him an account number and by allowing him to select, without revealing to anyone, his own secret Personal Identification Number (PIN) 33. Thus, the account number 31, the user's secret PIN 33, and the host computer identification or key number 34 are all encrypted 35 using an irreversible algorithm of the type described in the literature to produce a Personal Verification Number (PVN) 37 that is suitably stored 39 for the named user, along with his account number, call-back information 41 about the named user and a generated Synch Index Number (SIN) 43. The PVN's may be stored in encrypted form (e.g., using key codes that are stored in the security module 28) along with other associated data for the named users who are authorized to use the system, thereby enhancing the security of the system against unauthorized intrusions. Of course, the Central Processor Unit 36 of the host computer controls the encryption process 35, the generation of Synch Index Numbers 43, the entry and limited access to the secured storage module 28, 39, and the generation of a mass-storage, floppy disc-type program-storage medium containing the Synch Index Number (which may be random) as the initial Synchronizing Number 45 and other program information for use by the authorized individual at the location of his remote terminal.

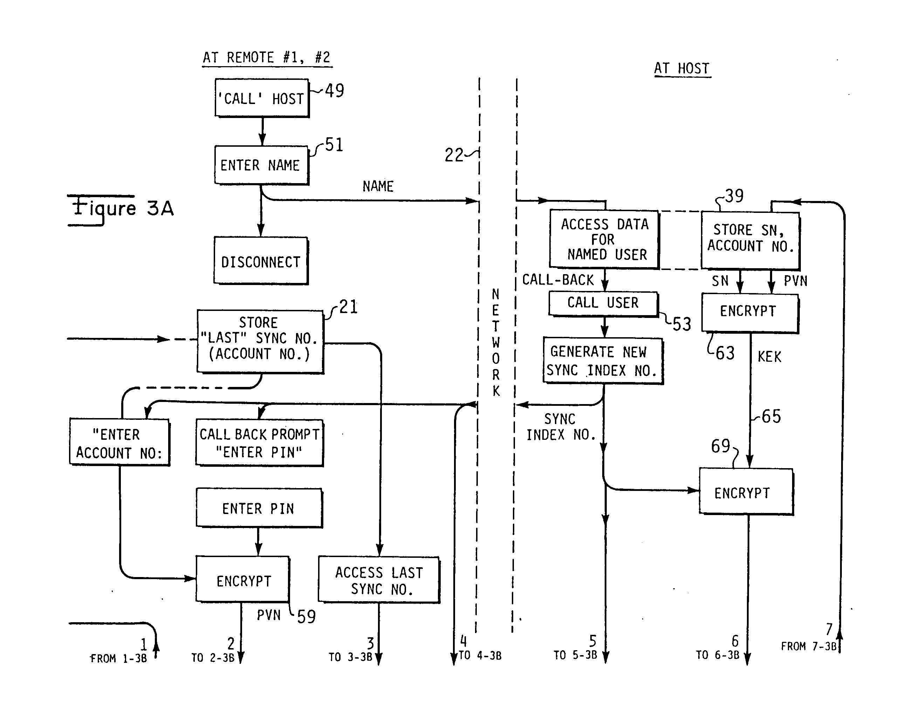

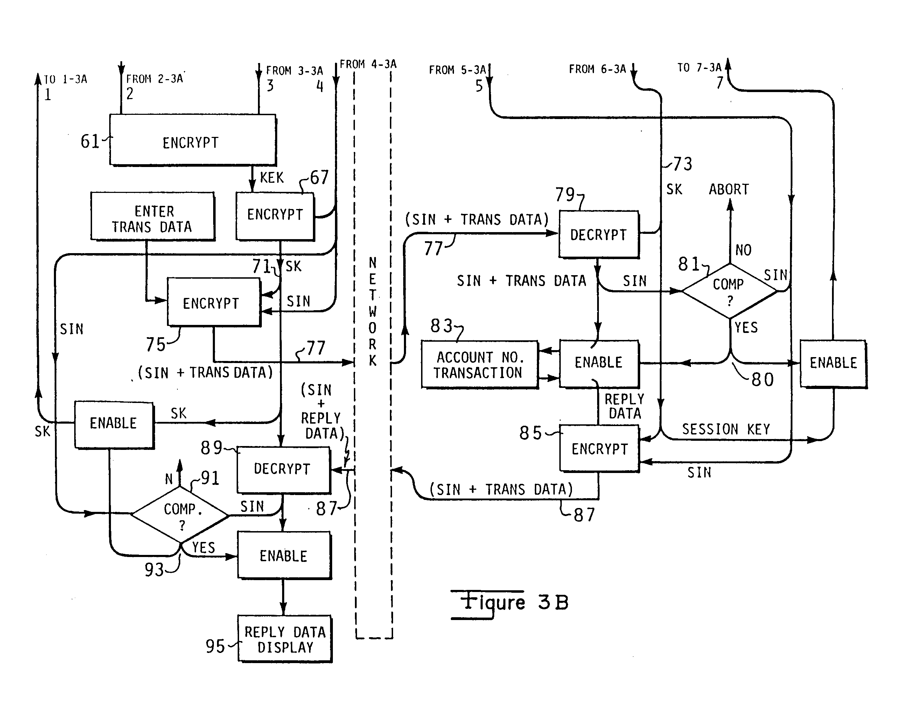

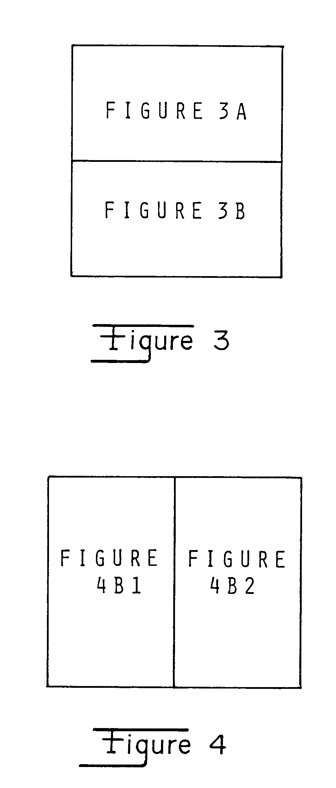

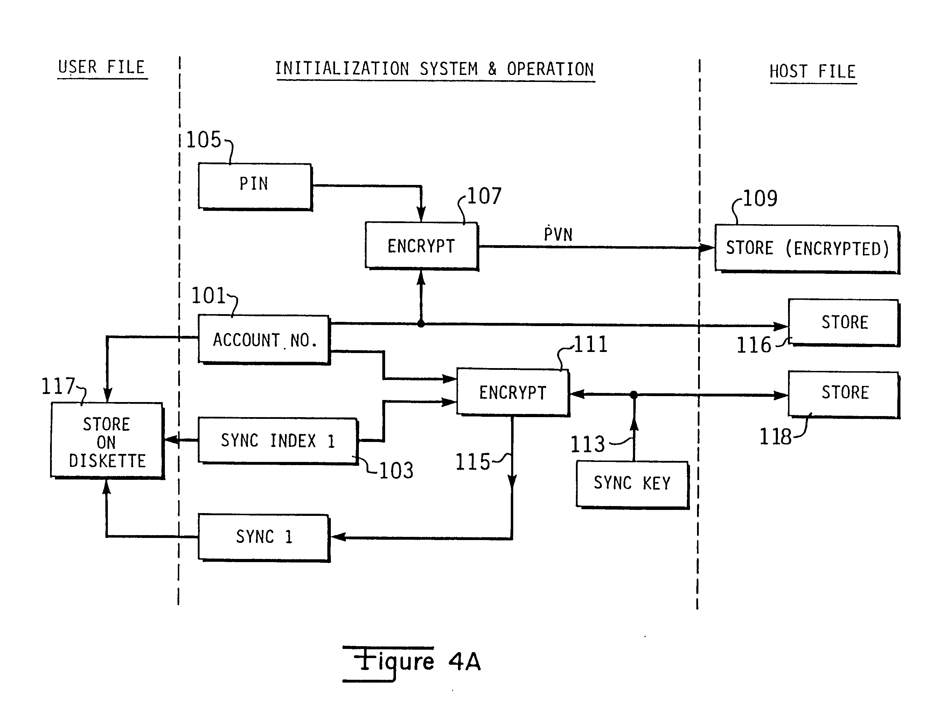

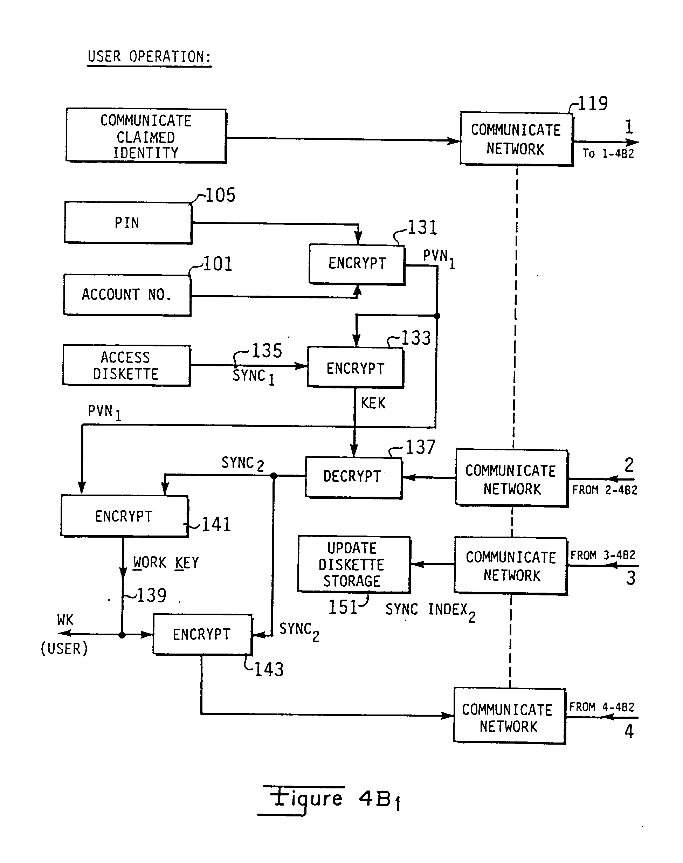

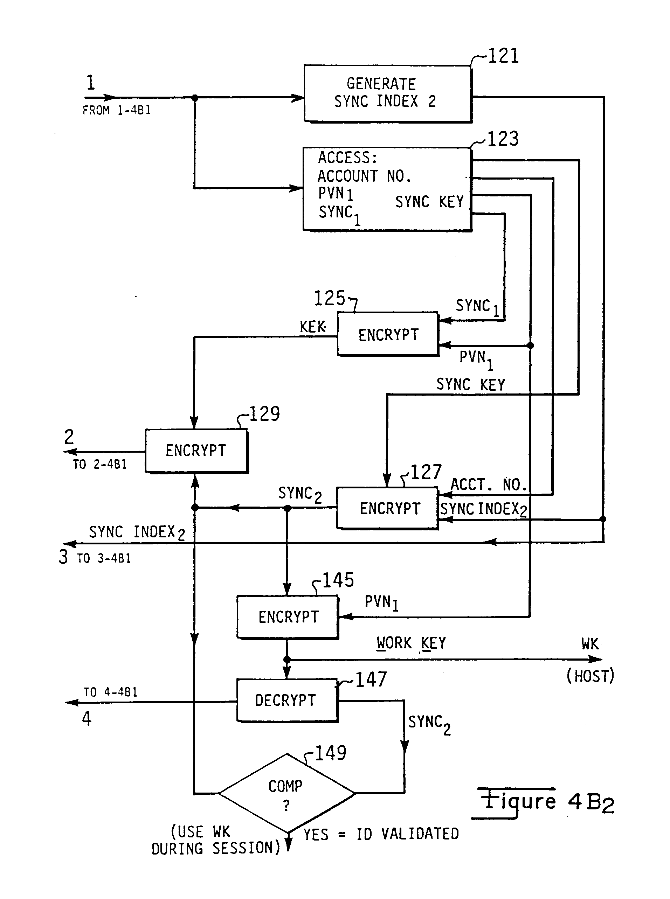

After the storage medium is thus initialized, the authorized individual may now operate the secured communication system, as illustrated in the flow diagram of Figure 3 or Figure 4. With respect to the embodiment of the invention that is illustrated in Figure 3, the authorized user of the terminal 9, operating with the program information from the floppy-disc, program-storage medium in the storage module 21 as specially prepared for him in the initialization process, now calls 49 the host computer 29 via the communication network 22 and enters 51 his name or other form of claimed identity via keyboard 13. After the name or claimed identity is communicated to the host computer 29 via the communication network 22, the user may, optionally, disconnect and wait to be called back by the host computer 29. The communicated name or other claimed identity is the basis for accessing 53 from storage 39 the data about the authorized user that is on file at the host computer 29 resulting from the initialization procedure. Thus, the user can be called back 53 and sent a new Synch Index Number at the network (telephone) number that is in storage 39. Additionally, the user is prompted 55 to enter his PIN and optionally may be prompted to enter his account number (if it is not stored 21 on the floppy-disc, program-storage medium operating in storage module 21).

The host computer 29 and the remote user may now proceed to establish a session key for controlling encryption and decryption of messages over the communication network 22. First, at the host computer 29, additional information about the user identified by the claimed identity is accessed from storage 39 to yield the PVN and the last synchronizing number SN in storage. If the previous transaction was initialization, then the SN is the initial Synch Index Number $SIN_1$. If the previous transaction was a data transfer session, then the SN is the Session Key (SK) used during that previous session, as later described. Similarly, at the remote terminal 9, the SN is accessed from storage module 21 and is either the SIN from the previous initialization procedure or the SK used in the previous data transfer session, and should be identical to the SN accessed from storage 39 at the host computer 29.

At the remote terminal 9, the PIN entered by the user is irreversibly encrypted 59 with his account number (entered manually or accessed from the storage module 21) and the host I.D. or key number accessed from the storage module 21 (if such was used during initialization to generate the PVN) to yield the PVN that should be identical to the PVN stored upon initialization at the host computer. This PVN generated (not stored) at the user's location is then encrypted 61 with the last SN accessed from storage to yield the Key-Exchange Key (KEK). Similarly, at the host computer 29, the accessed PVN and last SN from storage are encrypted 63 to yield the corresponding KEK 65. The SIN available at the host computer 29 and communicated to the remote terminal 9 may now be encrypted 67, 69 with the KEK at each location to yield corresponding Session Keys 71, 73. Data pertaining to the intended transaction may now be encrypted 75 with SK at the remote location (along with security-checking data such as SIN or other data such as PVN commonly codable at both locations) and sent in encrypted form 77 over the network 22 to the host computer 29.

The encrypted data 77 as received at the host computer 29 is decrypted 79 using the SK 73 generated at that location to yield the SIN and the transaction data. The SIN as decrypted may be compared 81 with the SIN generated at the host computer to provide indication 80 that the authorized user is communicating the transaction data and that such data is faithfully received in unaltered form. The transaction data may be acted upon and the session key may be used to update the synchronizing number (SN) in storage 39 in response to favorable comparison 80 of the SIN's. In addition, any reply data resulting from implementation of the transaction 83, or a basic acknowledgment may be encrypted with SK (along with such security-checking code as SIN or other data such as PVN commonly codable at both locations) and sent 87 to the remote terminal 9 via network 22.

The encrypted reply data 87 is decrypted 89 at the remote terminal 9 using the SK generated at that location to yield the reply data and SIN. The decrypted SIN is compared 91 with the SIN originally sent for the session and, upon favorable comparison 93, the reply data may be displayed 95 and the SN in storage module 21 is updated with the SK of this session. The SN at the host computer 29 therefore remains in synchronism with the SN at the remote terminal 9 for use in subsequent data-transfer sessions in the manner previously described.

With respect to the embodiment of the invention illustrated in Figures 4a and 4b, the individual user must be initially processed to establish his authority to use the system. The user is assigned an account number 101 and an initial Synchronizing Index Number$_1$ 103, and he may select and retain secretly his own PIN 105. The account number 101 and PIN 105 are encrypted 107 to yield Personal Verification Number 1 which is stored 109 at the host computer location (preferably in encrypted form). Similarly, the user's account number 101 and initial Sync Index$_1$ 103 are encrypted 111 using a host sync key 113 to yield SYNC$_1$ code 115. The account number 101 and sync key 113 are stored 116, 118 at the host computer along with the user's PVN$_1$. Additionally, SYNC$_1$ is also stored 117 on a portable memory medium such as a floppy disc-type diskette, or the like, along with the user's account number and initial Sync Index$_1$.

In operation, a user communicates his claimed identity (e.g., name) over communication network 119 to the host computer which generates new Sync Index$_2$ 121 and accesses 123 the account number, the PVN$_1$ and the SYNC$_1$ stored for the named user. The SYNC$_1$ and PVN$_1$ are encrypted 125 to yield the Key-Exchange Key. Also, the account number and the Sync Index$_2$ are encrypted 127 using the host sync key to yield SYNC$_2$ which is now encrypted 129 with KEK and sent in encrypted form over communication network 119 to the user.

At the user's location, the user's PIN 105 and account number 101 are encrypted 131 to yield PVN$_1$ which is encrypted 133 with SYNC$_1$ accessed 135 from the diskette storage medium to yield the KEK.

The SYNC$_2$ encrypted 129 by KEK at the host computer location and received at the user's location may now be decrypted 137 using KEK to yield SYNC$_2$ at the user's location. SYNC$_2$ is encrypted 141 with PVN$_1$ to yield the Working Key 139 for the session. However, to verify the user's authority and identity the WK is encrypted 143 with SYNC$_2$ and sent to the host computer for comparison. There, SYNC$_2$ is encrypted 145 with PVN$_1$ to yield WK at the host. WK is used to decrypt 147 the received encryption from the user to yield the user's SYNC$_2$ which is compared 149 with the host's SYNC$_2$. Favorable comparison of these SYNC$_2$ codes thus verifies that the user's PIN is the valid one for the named user, that diskette storage medium is being operated by the authorized user, that the new Sync Index$_2$ may be updated into storage 151 in place of the initial (or previous) Sync Index$_1$, and that the WK codes at both ends are identical and available for encrypting and decrypting messages exchanged between host and user throughout the data-exchanging session.

It should be understood that "transaction data" as used herein generally includes myriad possible interactions between a host computer and a remote terminal. For example, subscription information services such as stock quotation services may furnish stock quotes as the "reply data" in response to a request message. Also, electronic banking or funds-transfers may be implemented in reply to request to disburse or transfer funds as directed. In addition, electronic mail may be transferred between two remote terminals with the aid of the host computer 29. In this type of transaction, the first authorized user 9 operates the system as described to "deposit" the mail message in an account number or "mailbox" for a second authorized user who then operates the system as described in connection with Figure 3 (using his own name, account number, PIN, last SN, etc.) to access the "mailbox" in response to his request.

Therefore, the system and method of the present invention are operable on standard computers operating as remote terminals using inexpensive floppy-disc mass storage media, or the like, which are initialized for individual users and which are updated in synchronism with the responding host computer. In this way, the inexpensive medium cannot be duplicated to be useful to another individual with a different account number, or to be useful on the same account number without the secret PIN of the authorized user. In addition, the messages which are transmitted between locations over unsecured communication networks are merely the names of users, random numbers and encrypted messages with no discernible logical correlation between them available for unauthorized interception and use of the messages. Finally, KEK's, Session Keys, and Working Keys can be used not only to protect transactions from attack as discussed above, but also provide the full range of cryptographic modes of operation which can be utilized to generate Message Authentication Codes (MAC), Transaction Signatures, and the like, in order to protect against fraudulent Host Applications.

## Claims

1. Method for securing data communication between the remote location (9) of an individual user who has an assigned account number (31;101) and a host location (29), the method comprising the initializiation steps of;
producing a validation number (37; PVN) that is unique to the user as a first encryption function of the user's account number (31;101) and a code information (33;105;PIN) received from the user;
generating two numbers termed respectively the sync key (113) and the sync index (43;103), and producing a sync number in accordance with a second encryption function of the sync key, the sync index (43;103) and the user's account number (31;101); storing the sync index (43;103) and the sync number (45;115) for access at the user's remote location (9); and
storing (116,118) the validation number (37;PVN), the account number (31;101) and the sync key (113) for access at the host location (29), and further comprising the transaction steps of:
encrypting (59;107;131) the account number (31;101) and a user's personal identification number (33;105;PIN) using said first encryption function to generate the user's validation number (PVN) and accessing the sync number at the user's remote location (9);
producing (61) at the user's remote location (9) an exchange key (KEK) as a third encryption function of the validation number (37;PVN) and sync number (45;115); accessing (53) from storage at the host location (29) the validation number (37;PVN) and sync number (45;115) of an identified user;
producing (63) at the host location (29) an exchange key (KEK) as said third encryption function of the accessed validation number (37;PVN) and sync number (45;115) of said identified user;
generating (121) a second sync index at the host location (29);
accessing from storage at said host location (29) the sync key, the account number (31;101), and the validation number (37;PVN) for the identified user;
producing at said host location (29) a second sync number as a fourth encryption function of said accessed sync key and account number and the generated second sync index;
producing at said host location (29) a working key (WK) as a fifth encryption function of the second sync number (SYNC$_2$) and the accessed validation number (PVN );
encrypting at said host location (29) said second sync number using said exchange key in accordance with a sixth encryption function thereof to produce an encoded output for transmission to the user's remote location;
decrypting in accordance with said sixth encryption function said encrypted output received at the user's remote location using said exchange key produced threat to provide said second sync number (SYNC$_2$) at the user's remote location (9);
encrypting (143) at the user's remote location (9) in accordance with said fifth encryption function said decrypted second sync number (SYNC$_2$) and user's validation number (PVN$_1$) to produce a working key (WK;139) and
transmitting between the user's remote location (9) and host location (29) selected data that is encrypted and decrypted at respective locations (9;29) in accordance with the same encryption function of the working keys (WK) which are produced at the respective locations (9:29).

2. Method according to claim 1, wherein one or more further transactions using the transaction steps may be carried out in favour of an identified user.

3. Method according to claim 1 or claim 2, comprising the additional steps of:
encrypting (143) at one of said user's remote and host locations (9;29) in accordance with a seventh encryption function the working key (WK) and second sync number (SYNC$_2$) available thereat to produce a second encrypted output for transmission to the other of said user's remote and host locations (9;29);
decrypting (137) at said other location in accordance with said seventh encryption function the second encrypted output received thereat to produce the second sync number (SYNC$_2$) therefrom; and
comparing (149) the second sync number produced by said decryption with the second sync number produced thereat to provide indications of valid communications between said locations by the authorized user.

4. Method as in claim 3 comprising the additional step of communicating to the user's remote location (9) said second sync index produced at said host location (29) for selectively superseding said sync index in storage at the user's remote location (9).

5. Method as in claim 3 for securing data communications between first and second users at separated remote locations via said host location, the method comprising the additional steps of:
performing the recited steps with respect to a first user's remote location (9) and the host location (29) and with respect to a second user's remote location and the host location (29) to produce a first working key at the first user's remote location (9) and at the host location (29), and to produce a second working key at the second user's remote location and at the host location (29);
and wherein in said transmitting step said first user transmits to the host location (29) selected data encrypted using the first working key for decryption at the host location using the first working key and for encryption thereat using the second working key for transmission to the remote location of the second user for decryption thereat using the second working key.

6. Method according to claim 3 wherein in the transmitting step, selected data is encrypted and decrypted along with the sync index number and working key available at the respective location; and comprising the additional step of comparing the received and decrypted sync index number at the respective location with the sync index number present thereat.

7. System for use by an authorized user having an account number for securely transferring data from one remote location (9) to a host location (29) at which selected information about such user is stored, the system comprising:
means (36) for producing a validation number that is unique to the user as a first encryption function of the user's account number and code information received from the user;
means (36) for generating two numbers termed respectively the sync key and the sync index, and for producing a sync number in accordance with a second encryption function of the sync key, the sync index and the user's account number;
first storage means (28) at said host location (29) for storing a signal corresponding to said sync key and a signal corresponding to said account number and a signal corresponding to said validation number;
second storage means (21) at the user's remote location (9) for storing a sync index signal and a sync signal as a logical combination of said account number signal, sync index signal and sync key signal;
means at said host location (29) for selectively accessing from said first storage means the sync signal, validation number signal of an identified user, and the sync key signal;
means at said host location (29) for encrypting said accessed sync signal and validation number signal to produce an exchange key signal as the third encryption function of the sync number and validation number signals applied thereto;
means (23) at said host location for generating a second sync index signal;
means at said host location for encrypting the sync key signal, the account number signal and the second sync index signal for producing a second sync signal therefrom as the fourth encryption function of said signals applied thereto;
means at said host location for encrypting the second sync signal and accessed validation number signal as the fifth encryption function of signals applied thereto to provide a working key signal;

means at said host location for encrypting the second sync signal and exchange key signal to produce as the sixth encryption function thereof a coded output for transmission to the user's remote location (9);

means (11) at said user's remote location (9) for providing the validation number signal;

means (11) at said user's remote location (9) for selectively accessing sold second storage means to provide said sync signal;

means (11) at said user's remote location (9) for encrypting said validation number signal and said sync signal in accordance with said third encryption function of said signals to produce an exchange key signal; means (11) at said user's remote location (9) for decrypting the coded output received at the user's remote location (9) with said exchange key signal in accordance with said sixth encryption function to provide said second sync signal at the user's remote location (9);

means (11) at said user's remote location (9) for encrypting said validation number signal and said decrypted second sync signal in accordance with said fifth encryption function thereof to provide a working key signal; and

means at the user's remote and host locations (9;29) for encrypting and decrypting data in accordance with a common logical combination thereof with said working key signals at each location for transfer in encrypted form therebetween.

## Revendications

1. Procédé pour protéger des communications de données entre le poste éloigné (9) d'un utilisateur individuel qui a un numéro de compte affecté (31 ; 101) et un poste d'ordinateur principal (29), le procédé comprenant les étapes d'initialisation consistant à :
   - produire un numéro de validation (37 : PVN) qui est unique pour l'utilisateur sous la forme d'une première fonction de chiffrage du numéro de compte d'utilisateur (31 ; 101) et une information de code (33 ; 105 ; PIN) reçue en provenance de l'utilisateur ;
   - établir deux numéros appelés respectivement la clé de synchronisation (113) et l'index de synchronisation (43 ; 103), et produire un numéro de synchronisation en concordance avec une seconde fonction de chiffrage de la clé de synchronisation, de l'index de synchronisation (43 ; 103) et du numéro de compte d'utilisateur (31 : 101) ;
   - mémoriser l'index de synchronisation (43 ; 103) et le numéro de synchronisation (45 ; 115) pour un accès au poste éloigné (9) d'utilisateur ; et
   - mémoriser (116, 118) le numéro de validation (37 : PVN), le numéro de compte (31 ; 101) et la clé de synchronisation (113) pour un accès au poste principal (29),
   - le procédé comprenant en outre les étapes de transaction consistant à :
   - chiffrer (59 : 107 : 131) le numéro de compte (31 ; 101) et un numéro d'identification personnel d'utilisateur (33 ; 105 ; PIN) en utilisant ladite première fonction de chiffrage pour établir le numéro de validation d'utilisateur (PVN) et pour accéder au numéro de synchronisation dans le poste éloigné (9) de l'utilisateur ;
   - produire (61) dans le poste éloigné d'utilisateur (9) une clé d'échange (KEK) sous la forme d'une troisième fonction de chiffrage du numéro de validation (37 ; PVN) et du numéro de synchronisation (45 ; 115) ;
   - accéder (53), dans la mémoire du poste principal (29), au numéro de validation (37 ; PVN) et au numéro de synchronisation (45 ; 115) d'un utilisateur identifié ;
   - produire (63) dans le poste principal (29) une clé d'échange (KEK) sous la forme de ladite troisième fonction de chiffrage du numéro de validation (37 ; PVN) et du numéro de synchronisation (45 ; 115) obtenus pour ledit utilisateur identifié ;
   - établir (121) un second index de synchronisation dans le poste principal (29) ;
   - accéder, dans la mémoire dudit poste principal (29), à la clé de synchronisation, au numéro de compte (31 ; 101) et au numéro de validation (37 ; PVN) de l'utilisateur identifié ;
   - produire, dans ledit poste principal (29), un second numéro de synchronisation sous la forme d'une quatrième fonction de chiffrage de ladite clé de synchronisation obtenue, du numéro de compte obtenu et du second index de synchronisation obtenu ;
   - produire dans ledit poste principal (29) une clé de travail (WK) sous la forme d'une cinquième fonction de chiffrage du second numéro de synchronisation (SYNC$_2$) et du numéro de validation obtenus (PVN) ;
   - chiffrer dans ledit poste principal (29) ledit second numéro de synchronisation utilisant ladite clé d'échange en correspondance avec une sixième fonction de chiffrage de celle-ci pour produire un signal de sortie codé pour transmission au poste éloigné d'utilisateur ;

- déchiffrer en correspondance à ladite sixième fonction de chiffrage ladite sortie chiffrée reçue dans le poste éloigné d'utilisateur en utilisant ladite clé d'échange produite dans celui-ci de manière à obtenir ledit second numéro de synchronisation (SYNC$_2$) dans le poste éloigné d'utilisateur (9) ;

- chiffrer (143) dans le poste éloigné d'utilisateur (9), en correspondance à ladite cinquième fonction de chiffrage, ledit second numéro de synchronisation déchiffré (SYNC$_2$) et ledit numéro de validation d'utilisateur (PVN$_1$) pour produire une clé de travail (WK ; 139) et

- transmettre entre le poste éloigné d'utilisateur (9) et le poste principal (29) une donnée sélectionnée qui est chiffrée et déchiffrée dans les postes respectifs (9 ; 29) en concordance avec la même fonction de chiffrage des clés de travail (WK) qui sont produites dans les postes respectifs (9 ; 29).

2. Procédé selon la revendication 1, dans lequel une ou plusieurs autres transactions utilisant les étapes de transaction peuvent être effectuées en faveur d'un utilisateur identifié.

3. procédé selon la revendication 1 ou la revendication 2, comprenant les étapes additionnelles consistant à :
   - chiffrer (143) dans l'un desdits postes constitués par le poste éloigné d'utilisateur et le poste principal (9 ; 29), en correspondance à une septième fonction de chiffrage, la clé de travail (WK) et le second numéro de synchronisation (SYNC$_2$) disponibles pour produire une seconde sortie chiffrée destinée à être transmise à l'autre desdits postes constitués par le poste éloigné d'utilisateur et le poste principal (9 ; 29) ;
   - déchiffrer (137) dans ledit autre poste et en concordance avec ladite septième fonction de chiffrage la seconde sortie chiffrée reçue dans ce poste de manière à produire le second numéro de synchronisation (SYNC$_2$) à partir de celle-ci ; et
   - comparer (149) le second numéro de synchronisation produit par ledit déchiffrage avec le second numéro de synchronisation obtenu de façon que l'utilisateur autorisé obtienne les indications de communications valables entre les postes précités.

4. Procédé selon la revendication 3, comprenant l'étape additionnelle consistant à communiquer audit poste éloigné d'utilisateur (9) ledit second index de synchronisation produit dans ledit poste principal (29) en vue de remplacer sélectivement ledit index de synchronisation dans la mémoire installée dans le poste éloigné d'utilisateur (9).

5. Procédé selon la revendication 3 pour protéger des communications de données entre un premier et un second utilisateur installés dans des postes éloignés séparés par l'intermédiaire dudit poste principal, le procédé comprenant les étapes additionnelles consistant à :
   - effectuer les étapes précitées se rapportant à un poste éloigné de premier utilisateur (9) et au poste principal (29) et se rapportant également au poste éloigné de second utilisateur et au poste principal (29) afin de produire une première clé de travail dans le poste éloigné de premier utilisateur (9) et dans le poste principal (29), et également de produire une seconde clé de travail dans le poste éloigné de second utilisateur et dans le poste principal (29) ;
   - et en outre, dans ladite étape de transmission, ledit premier utilisateur transmet au poste principal (29) des données sélectionnées qui sont chiffrées en utilisant la première clé de travail pour un déchiffrage dans le poste principal en utilisant la première clé de travail et pour un chiffrage dans celui-ci en utilisant la seconde clé de travail en vue d'une transmission au poste éloigné du second utilisateur en vue d'un déchiffrage dans celui-ci en utilisant la seconde clé de travail.

6. Procédé selon la revendication 3, dans lequel, dans l'étape de transmission, des données sélectionnées sont chiffrées et déchiffrées en même temps que le numéro d'index de synchronisation et la clé de travail disponibles dans le poste respectif ; et le procédé comprenant l'étape additionnelle consistant à comparer le numéro d'indexage de synchronisation qui a été reçu et déchiffré dans le poste respectif avec le numéro d'index de synchronisation existant dans celui-ci.

**7.** Système utilisable par un utilisateur autorisé possédant un numéro de compte pour transférer de façon protégée des données depuis un poste éloigné (9) jusqu'à un poste principal (29) dans lequel une information sélectionnée concernant ledit utilisateur est mémorisée, le système comprenant :

- des moyens (36) pour produire un numéro de validation qui est unique pour l'utilisateur sous la forme d'une première fonction de chiffage du numéro de compte d'utilisateur et d'une information codée reçue en provenance de l'utilisateur ;

- des moyens (36) pour produire deux numéros appelés respectivement la clé de synchronisation et l'index de syncnronisation et pour produire un numéro de synchronisation en concordance avec une seconde fonction de chiffrage de la clé de synchronisation, de l'index de synchronisation et du numéro de compte de l'utilisateur ;

- un premier moyen de mémorisation (28) installé dans ledit poste principal (29) pour mémoriser un signal correspondant à ladite clé de synchronisation et un signal correspondant audit numéro de compte ainsi qu'un signal correspondant audit numéro de validation ;

- un second moyen de mémorisation (21) installé dans le poste éloigné d'utilisateur (9) pour mémoriser un signal d'index de synchronisation et un signal de synchronisation sous la forme d'une combinaison logique dudit signal de numéro de compte, dudit signal d'index de synchronisation et dudit signal de clé de synchronisation ;

- des moyens installés dans ledit poste principal (29) pour accéder sélectivement, dans ledit premier moyen de mémorisation, au signal de synchronisation, au signal de numéro de validation d'un utilisateur identifié et au signal de clé de synchronisation ;

- des moyens prévus dans ledit poste principal (29) pour le chiffrage dudit signal de synchronisation et dudit signal de numéro de validation qui ont été obtenus de façon à produire un signal de clé d'échange sous la forme de la troisième fonction de chiffrage des signaux représentant le numéro de synchronisation et le numéro de validation qui lui ont été appliqués ;

- des moyens (23) prévus dans ledit poste principal pour produire un second signal d'index de synchronisation ;

- des moyens prévus dans ledit poste principal pour chiffrer le signal de clé de synchronisation, le signal de numéro de compte et le second signal d'index de synchronisation de manière à produire un second signal de synchronisation sous la forme de la quatrième fonction de chiffrage desdits signaux ainsi appliqués ;

- des moyens installés dans ledit poste principal pour chiffrer le second signal de synchronisation et le signal de numéro de validation obtenu sous la forme de la cinquième fonction de chiffrage des signaux appliqués afin d'obtenir un signal de clé de travail ;

- des moyens prévus dans ledit poste principal pour chiffrer le second signal de synchronisation et le signal de clé d'échange de manière à produire, sous la forme de la sixième fonction de chiffrage, une sortie codée pour transmission au poste éloigné d'utilisateur (9) ;

- des moyens (11) prévus dans ledit poste éloigné d'utilisateur (9) pour obtenir le signal de numéro de validation ;

- des moyens (11) prévus dans ledit poste éloigné d'utilisateur (9) pour accéder sélectivement audit second moyen de mémorisation afin d'obtenir ledit signal de synchronisation ;

- des moyens (11) prévus dans ledit poste éloigné d'utilisateur (9) pour chiffrer ledit signal de numéro de validation et ledit signal de synchronisation en concordance avec ladite troisième fonction de chiffrage des signaux pour produire un signal de clé d'échange ;

- des moyens (11) prévus dans ledit poste éloigné d'utilisateur (9) pour déchiffrer la sortie codée reçue dans le poste éloigné d'utilisateur (9) avec ledit signal de clé d'échange en concordance à ladite sixième fonction de chiffrage pour obtenir ledit second signal de synchronisation dans le poste éloigné d'utilisateur (9) ;

- des moyens (11) prévus dans ledit poste éloigné d'utilisateur (9) pour chiffrer ledit signal de numéro de validation et ledit second signal de synchronisation déchiffré en concordance avec ladite cinquième fonction de chiffrage de manière à obtenir un signal de clé de travail ; et

- des moyens prévus dans ledit poste éloigné d'utilisateur (9) et dans ledit poste principal (29) pour chiffrer et déchiffrer des données en concordance avec une combinaison logique commune avec lesdits signaux de clé de travail obtenus dans chaque poste en vue d'une transmission sous forme chiffrée entre eux.

**Patentansprüche**

1. Verfahren zum Schützen der Datenübertragung zwischen dem entferntliegenden Standort (9) eines Einzelnutzers, welcher eine zugeordnete Kontonummer (31; 101) hat, und einem Host-Standort (29), wobei das Verfahren die Initialisierungsschritte:
Erzeugen einer Gültigkeitsprüfzahl (37; PVN), die nur den Nutzer betrifft, als eine erste Verschlüsselungsfunktion der Kontonummer (31; 101) des Verwenders,und einer Code-Information (33; 105; PIN), die vom Verwender empfangen worden ist;
Erzeugen zweier Zahlen, die jeweils als Synchronisationsschlüssel (113) und als Synchronisationsindex (43; 103) bezeichnet werden und Erzeugen einer Synchronisationszahl gemäß einer zweiten Verschlüsselungsfunktion des Synchronisationsschlüssels, des Synchronisationsindex (43; 103) und der Kontonummer (31; 101) des Nutzers; Speichern des Synchronisationsindex (43; 103) und der Synchronisationszahl (45; 115) für den Zugriff an dem entferntliegenden Standort (9) des Nutzers; und Speichern (116, 118) der Gültigkeitsprüfzahl (37; PVN), der Kontonummer (31; 101) und des Synchronisationsschlüssel (113) für den Zugriff an dem Host-Standort (29) aufweist und weiterhin die Transaktionsschritte:
Verschlüsseln (59; 107; 131) der Kontonummer (31; 101) und einer persönlichen Identifizierungszahl (33; 105; PIN) des Nutzers, wobei die erste Verschlüsselungsfunktion verwendet wird, um die Gültigkeitsprüfzahl (PVN) des Nutzers zu erzeugen, und wobei die Synchronisationszahl an dem entferntliegenden Standort (9) des Nutzers zugegriffen wird;
Erzeugen (61) eines Austauschschlüssels (KEK) als eine dritte Verschlüsselungsfunktion der Gültigkeitsprüfzahl (37; PVN) und der Synchronisationszahl (45; 115) an dem entferntliegenden Standort (9) des Nutzers;
Zugreifen (53) der Gültigkeitsprüfzahl (37; PVN) und der Synchronisationszahl (45; 115) eines identifizierten Nutzers aus dem Speicher an dem Host-Standort (29); Erzeugen (63) eines Austauschschlüssels (KEK) am Host-Standort (29) als dritte Verschlüsselungsfunktion der zugegriffenen Gültigkeitsprüfzahl (37; PVN) und der Synchronisationszahl (45; 115) des identifizierten Nutzers;
Erzeugen (121) eines zweiten Synchronisationsindex am Host-Standort (29);

Zugreifen auf den Synchronisationsschlüssel, die Kontonummer (31; 101) und die Gültigkeitsprüfzahl (37; PVN) für den identifizierten Nutzer aus dem Speicher an dem Host-Standort (29);
Erzeugen einer zweiten Synchronisationszahl an dem Host-Standort (29) als eine vierte Verschlüsselungsfunktion des zugegriffenen Synchronisationsschlüssels und der Kontonummer und des erzeugten zweiten Synchronisationsindex;
Erzeugen eines Arbeitsschlüssels (WK) an dem Host-Standort als eine fünfte Verschlüsselungsfunktion der zweiten Synchronisationszahl ($SYNC_2$) und der zugegriffenen Gültigkeitsprüfzahl (PVN);
Verschlüsseln der zweiten Synchronisationszahl unter Verwendung des Austauschschlüssels gemäß einer sechsten Verschlüsselungsfunktion an dem Host-Standort (29) zum Erzeugen einer codierten Ausgabe für die Übertragung zu dem entferntliegenden Standort des Nutzers;
Entschlüssein der verschlüsselten Ausgabe, die an dem entferntliegenden Standort des Verwenders empfangen worden ist, gemäß der sechsten Verschlüsselungsfunktion, wobei der dort erzeugte Austauschschlüssel verwendet wird, um die zweite Synchronisationszahl ($SYNC_2$) an dem entferntliegenden Standort (9) des Nutzers zur Verfügung zu stellen;
Verschlüsseln (143) der entschlüsselten zweiten Synchronisationszahl ($SYNC_2$) und der Gültigkeitsprüfzahl ($PVN_1$) des Nutzers gemäß der fünften Verschlüsselungsfunktion am entferntliegenden Standort (9) des Nutzers, um einen Arbeitsschlüssel (WK; 139) zu erzeugen und
Übertragen ausgewählter Daten zwischen dem entferntliegenden Standort (9) des Nutzers und dem Host-Standort (29), die an jeweiligen Standorten (9; 29) gemäß derselben Verschlüsselungsfunktion der Arbeitsschlüssel (WK) verschlüsselt und entschlüsselt worden sind, die an den jeweiligen Standorten (9; 29) erzeugt werden, aufweist.

2. Verfahren nach Anspruch 1, bei dem eine oder mehrere weitere Transaktionen, bei denen die Transaktionsschritte verwendet werden, für einen identifizierten Nutzer ausgeführt werden können.

3. Verfahren nach Anspruch 1 oder Anspruch 2, mit den zusätzlichen Schritten:
Verschlüsseln (143) an einem Standort (9; 29), dem entferntliegenden des Nutzers oder dem des Hostes, des Arbeitsschlüssels (WK) und

der zweiten Synchronisationszahl (SYNC$_2$), die dort verfügbar sind, gemäß einer siebenten Verschlüsselungsfunktion um eine zweite verschlüsselte Ausgabe für die Übertragung an den anderen der Standorte (9; 29), den entferntliegenden des Nutzers oder den des Hostes, zu erzeugen;
Verschlüsseln (137) an dem anderen Standort der zweiten verschlüsselten Ausgabe, die dort empfangen worden ist, gemäß der siebten Verschlüsselungsfunktion, um die zweite Synchronisationszahl (SYNC$_2$) daraus zu erzeugen; und
Vergleichen (149) der zweiten Synchronisationszahl, die durch die Entschlüsselung erzeugt worden ist, mit der zweiten Synchronisationszahl, die dort erzeugt worden ist, um Angaben über gültige Übertragungen zwischen den Standorten durch authorisierte Nutzer zur Verfügung zu stellen.

4.  Verfahren nach Anspruch 3, mit dem zusätzlichen Schritt des Übertragens des zweiten Synchronisationsindex, der an dem Host-Standort (29) erzeugt worden ist, an den entferntliegenden Standort (9) des Nutzers um wahlweise den Synchronisationsindex im Speicher an dem entferntliegenden Standort (9) des Nutzers zu ersetzen.

5.  Verfahren nach Anspruch 3 zum Schützen der Datenübertragung zwischen ersten und zweiten Nutzern an voneinander getrennten, entferntliegenden Standorten über dem Host-Standort, wobei das Verfahren die zusätzlichen Schritte:
Ausführen der genannten Schritte in Bezug auf einen entferntliegenden Standort (9) eines ersten Nutzers und dem Host-Standort (29) und mit Bezug auf den entferntliegenden Standort eines zweiten Nutzers und dem Host-Standort (29), um einen ersten Arbeitsschlüssel am entferntliegenden Standort (9) des ersten Nutzers und am Host-Standort (29) zu erzeugen und um einen zweiten Arbeitsschlüssel an dem entferntliegenden Standort des zweiten Nutzers und an dem Host-Standort (29) zu erzeugen; aufweist;
und wobei beim Übertragungsschritt der erste Nutzer an den Host-Standort (29) ausgewählte Daten, die unter Verwendung des ersten Arbeitsschlüssels verschlüsselt worden sind, zur Entschlüsselung an dem Host-Standort, wobei der erste Arbeitsschlüssel verwendet wird, und für die dortige Verschlüsselung überträgt, wobei der zweite Arbeitsschlüssel verwendet wird, für die Übertragung an den entferntliegenden Standort des zweiten Nutzers zur dortigen Entschlüsselung, wobei der zweite Arbeitsschlüssel verwendet wird.

6.  Verfahren nach Anspruch 3, bei dem beim Übertragungsschritt ausgewählte Daten mit der Synchronisationsindexzahl und dem Arbeitsschlüssel, die an dem entsprechenden Standort verfügbar sind, verschlüsselt und entschlüsselt werden, und welches den zusätzlichen Schritt des
Vergleichens der empfangenen und verschlüsselten Synchronisationsindexzahl an dem jeweiligen Standort mit der dort vorliegenden Synchronisationsindexzahl aufweist.

7.  System zur Verwendung durch einen authorisierten Nutzer mit einer Kontonummer zum sicheren Übertragen von Daten von einem entferntliegenden Standort (9) zu einem Host-Standort (29), an dem ausgewählte Information über einen derartigen Nutzer gespeichert ist, wobei das System
eine Einrichtung (36) zum Erzeugen einer Gültigkeitsprüfzahl, welche nur den Nutzer betrifft, als erste Verschlüsselungsfunktion der Kontonummer des Nutzers und von Code-Information, die von dem Verwender erhalten worden ist;
eine Einrichtung (36) zum Erzeugen zweier Zahlen, die jeweils als Synchronisationsschlüssel und als Synchronisationsindex bezeichnet werden, und zum Erzeugen einer Synchronisationszahl gemäß einer zweiten Verschlüsselungsfunktion des Synchronisationsschlüssels, des Synchronisationsindex und der Kontonummer des Nutzers;
eine erste Speichereinrichtung (28) an dem Host-Standort (29) zum Speichern eines Signales, das dem Synchronisationsschlüssel entspricht, und eines Signales, das der Kontonummer entspricht, und eines Signales, das der Gültigkeitsprüfzahl entspricht;
einer zweiten Speichereinrichtung (21) an dem entferntliegenden Standort (9) des Nutzers zum Speichern eines Synchronisationsindexsignales und eines Synchronisationssignales als logische Kombination des Kontonummer-Signales, Synchronisationsindex-Signales und Synchronisationsschlüssel-Signales;
eine Einrichtung an dem Host-Standort (29) zum wahlweisen Zugreifen auf das Synchronisationssignal, das Gültigkeitsprüfzahl-Signal eines identifizierten Nutzers und des Synchronisationsschlüssel-Signals aus der ersten Speichereinrichtung;
einer Einrichtung an dem Host-Standort (29) zum Verschlüsseln des zugegriffenen Synchronisationssignales und des Gültigkeitsprüfzahlsignales zum Erzeugen eines Austauschschlüssel-Signales als dritte Verschlüsselungsfunktion der Synchronisationszahl- und Gültigkeitsprüfzahlsignale, die dahin geliefert werden; eine Einrichtung (23) an dem Host-Standort zum Erzeugen eines zweiten Synchronisationsindex-Signales;

eine Einrichtung an dem Host-Standort zum Verschlüsseln des Synchronisationsschlüssel-Signales, des Kontonummer-Signales und des zweiten Synchronisationsindex-Signales zum Erzeugen eines zweiten Synchronisationssignales als vierte Verschlüsselungsfunktion der dahin gelieferten Signale;

eine Einrichtung an dem Host-Standort zum Verschlüsseln des zweiten Synchronisationssignales und des zugegriffenen Gültigkeitsprüfzahlsignales als fünfte Verschlüsselungsfunktion von Signalen, die dahin geliefert werden, um ein Arbeitsschlüssel-Signal zur Verfügung zu stellen;

eine Einrichtung an dem Host-Standort zum Verschlüsseln des zweiten Synchronisationssignales und des Austauschschlüssel-Signales zum Erzeugen einer codierten Ausgabe als sechste Verschlüsselungsfunktion für die Übertragung zu dem entferntliegenden Standort (9) des Nutzers;

eine Einrichtung (11) an dem entferntliegenden Standort (9) des Nutzers, um das Gültigkeitsprüfzahl-Signal zur Verfügung zu stellen;

eine Einrichtung (11) an dem entferntliegenden Standort (9) des Nutzers zum wahlweisen Zugreifen auf die zweite Speichereinrichtung, um das Synchronisationssignal zur Verfügung zu stellen;

eine Einrichtung (11) an dem entferntliegenden Standort (9) des Nutzers zum Verschlüsseln des Gültigkeitsprüfzahl-Signales und des Synchronisationssignales gemaß der dritten Verschlüsselungsfunktion der Signale, um ein Austauschschlüssel-Signal zu erzeugen;

eine Einrichtung (11) an dem entferntliegenden Standort (9) des Nutzers zum Verschlüsseln der codierten Ausgabe, die an dem entferntliegenden Standort (9) des Nutzers empfangen worden ist, mit dem Austauschschlüssel-Signal gemaß der sechsten Verschlüsselungsfunktion, um das zweite Synchronisationssignal am entferntliegenden Standort (9) des Nutzers zur Verfügung zu stellen; eine Einrichtung (11) an dem entferntliegenden Standort (9) des Nutzers zum Verschlüsseln des Gültigkeitsprüfzahl-Signales und des verschlüsselten zweiten Synchronisationssignales gemaß der fünften Verschlüsselungsfunktion, um ein Arbeitsschlüssel-Signal zur Verfügung zu stellen; und
eine Einrichtung am entferntliegenden Standort des Nutzers und am Host-Standort (9; 29) zum Verschlüsseln und Entschlüssein von Daten gemäß einer gemeinsamen logischen Kombination mit den Arbeitsschlüssel-Signalen an jedem Standort für die Übertragung zwischen ihnen in verschlüsselter Form aufweist.

Figure 1

REMOTE

DISPLAY 15

KB 13

μP 11

20

MEMORY 19

STORE MOD 21

STORE MOD 25

27

COMM NETWORK 22

9

29

HOST

RN 23

20

μP

MEMORY

SECURITY MODULE 28

EP 0 168 667 B1

13

Figure 2

AT HOST

STORE SN, ACCOUNT NO. — 39

PVN

SN

ENCRYPT — 63

KEK — 65

ENCRYPT — 69

ACCESS DATA FOR NAMED USER

CALL-BACK

CALL USER — 53

GENERATE NEW SYNC INDEX NO.

SYNC INDEX NO.

NETWORK

7  FROM 7-3B

6  TO 6-3B

5  TO 5-3B

4  TO 4-3B

AT REMOTE #1, #2

'CALL' HOST — 49

ENTER NAME — 51

NAME

DISCONNECT

22

STORE "LAST" SYNC NO. (ACCOUNT NO.) — 21

CALL BACK PROMPT "ENTER PIN"

ENTER PIN

ENCRYPT

PVN — 59

ACCESS LAST SYNC NO.

"ENTER ACCOUNT NO:"

3  TO 3-3B

2  TO 2-3B

1  FROM 1-3B

Figure 3A

TO 1-3A 1
FROM 2-3A 2
FROM 3-3A 3
4
FROM 4-3A
FROM 5-3A 5
FROM 6-3A 6
TO 7-3A 7

61 — ENCRYPT

KEK 67

ENTER TRANS DATA

ENCRYPT

71 SK

SIN

ENCRYPT 75

SIN

SK — ENABLE

SIN

SK

(SIN + TRANS DATA) 77

(SIN + REPLY DATA)

89 — DECRYPT

N 91

COMP. ? SIN

93 YES

87

ENABLE

REPLY DATA DISPLAY 95

NETWORK

(SIN + TRANS DATA) 77

DECRYPT 79

73 SK

ABORT

SIN + TRANS DATA

SIN

81 COMP ? SIN

NO

YES

83 ACCOUNT NO. TRANSACTION

ENABLE

ENABLE

80

REPLY DATA

85 ENCRYPT

SESSION KEY

SIN

(SIN + TRANS DATA) 87

Figure 3B

EP 0 168 667 B1

FIGURE 3A

FIGURE 3B

Figure 3

FIGURE 4B1

FIGURE 4B2

Figure 4

HOST FILE

INITIALIZATION SYSTEM & OPERATION

USER FILE

109 — STORE (ENCRYPTED)

116 — STORE

118 — STORE

PVN

107 — ENCRYPT

105 — PIN

101 — ACCOUNT NO.

111 — ENCRYPT

113 — SYNC KEY

103 — SYNC INDEX 1

115

SYNC 1

117 — STORE ON DISKETTE

Figure 4A

USER OPERATION:

$$\text{Figure } 4B_1$$

Figure 4 B₂

20